# EUROPÄISCHE PATENTANMELDUNG

(11) **EP 4 011 675 A1**
(43) Veröffentlichungstag der Anmeldung: **15.06.2022**
(21) Anmeldenummer: 21193594.5
(22) Anmeldetag: 27.08.2021
(51) Int. Cl.: B60K 37/06

(54) **BEDIENEINHEIT FÜR WOHNMOBIL**

(30) Priorität: 27.08.2020 DE 102020122493
(71) Anmelder: Niesmann+Bischoff GmbH, 56751 Polch (DE)
(72) Erfinder: Kinderknecht, Eduard, 56220 Kettig (DE)
(74) Vertreter: Waller, Stefan

(57) **Zusammenfassung**

Bedieneinheit (1) für Funktionen eines Wohnmobils (2) mit einer Touchscreenfläche (3) mit Symbolen (4A - 4J) für die zu bedienenden Funktionen, wobei die Bedieneinheit (1) über ein Bussystem (5), insbesondere SCU (5), angesteuert wird. Vorgeschlagen wird, dass die Positionsbelegung der einzelnen Funktionen (4A - 4J) auf der Touchscreenfläche (3) frei programmiert werden kann und die Symbole (4A - 4J) durch eine Bildschirmfunktion angezeigt werden und/oder aufgedruckt sind. Ferner sind ein Lastmodul (6) mit solch einer Bedieneinheit (1) und ein Wohnmobil (2) mit einem Lastmodul (6) angegeben.

## Beschreibung

Die Erfindung betrifft eine Bedieneinheit für ein Wohnmobil, mit der zentral verschiedene Funktionen geschaltet und bedient werden können.

Stand der Technik ist, dass für unterschiedliche Funktionen unterschiedliche Bedienelemente, z.B. Spiegelverstellung und Spiegelheizung als separate Bedienelemente mit separaten Steuerungen, eingesetzt werden. Dabei erfolgen feste Funktionszuordungen über Hardwareverdrahtung, die nur mit großem Aufwand änderbar sind. Seit langem Stand der Technik sind auch analoge Bedienteile mit Schaltern.

Nachteilig an diesem Stand der Technik sind der hohe Platzbedarf, der große Aufwand für Verkabelung und das hohe Gewicht für aufwändige Verkabelung. Das verteilte System im Fahrzeug führt auch zu erschwerter Reparatur, Wartung und Montage. Das Bedienteil kann nicht einfach erweitert oder angepasst werden aufgrund hardwaremäßiger Verdrahtung. Es ist keine Funktionsanpassung möglich, z.B. für Öffnungszeiten von Ventilen.

Außerdem handelt es sich um ein antiquiertes Design, das nur durch komplett neue Werkzeuge angepasst werden kann, was erhebliche Kosten verursacht.

Der vorliegenden Erfindung liegt die Aufgabe zugrunde, eine Bedieneinheit für ein Wohnmobil zur Verfügung zu stellen, das verbessert ausgebildet ist und insbesondere die zuvor genannten Nachteile vermeidet.

Die Aufgabe wird durch eine Bedieneinheit mit den Merkmalen des unabhängigen Patentanspruchs 1, durch ein Lastmodul mit den Merkmalen des Patentanspruchs 10 und durch ein Wohnmobil mit den Merkmalen des Patentanspruchs 13 gelöst. Vorteilhafte Weiterbildungen der Bedieneinheit, des Lastmoduls und des Wohnmobils sind in den Unteransprüchen angegeben.

Die Aufgabe wird durch eine Bedieneinheit für Funktionen eines Wohnmobils mit einer Touchscreenfläche mit Symbolen für die zu bedienenden Funktionen, wobei die Bedieneinheit über ein Bussystem, insbesondere SCU, angesteuert wird, gelöst, wobei die Positionsbelegung der einzelnen Funktionen auf der Touchscreenfläche frei programmiert werden kann und die Symbole durch eine Bildschirmfunktion angezeigt werden und/oder aufgedruckt sind.

Ferner wird die Aufgabe durch ein Lastmodul für ein Wohnmobil mit zumindest einer solchen Bedieneinheit gelöst. Außerdem wird die Aufgabe durch ein Wohnmobil mit solch einem Lastmodul gelöst.

Das vorgeschlagene System, also das in das Wohnmobil integrierte Lastmodul mit der Bedieneinheit, kann eine neu designte, zentrale Bedieneinheit aufweisen, die als Glasflächenschalter mit Touch-Funktion ausgeführt ist. Ferner kann ein programmierbares Lastmodul vorgesehen sein, das für die Steuerung der Funktionen zuständig ist.

Folgende Funktionen können beispielsweise über das Bedienpaneel gesteuert werden:
- Spiegelheizung (je rechts und links),
- Spiegelverstellung,
- Scheibenheizung an/aus,
- Rollo/Sonnenblende hoch/runter,
- Trittstufe rein/raus,
- Abwasserentleerung auf/zu,
- Fäkalientank auf/zu,
- Beleuchtung im Fahrerhaus an/aus,
- Kameras durchschalten (Heck/Tankentleerung) und/oder
- Schubladenverriegelung auf/zu.

Des Weiteren steuert das Lastmodul beispielsweise noch folgende Funktionen:
- Positionsleuchte (je rechts und links), wobei die Funktion abhängig von Chassissignal ist,
- Tagfahrlicht (je rechts und links) (Funktion nur bei 12V/15),
- Sitzheizung (Funktion nur bei 12V/15),
- Fahrertür (Funktion nur bei 12V/15),
- AUX 12V/30 (Funktion immer gegeben),
- AUX 12/15 (Funktion nur bei 12V/15),
- Hubbett (Funktion nur bei ausgeschalteter Zündung) und/oder
- Ausgang D+ Positiv (Funktion über Signal X4/1).

Hierbei kann D+ ausgewertet und verstärkt werden. Funktionen können dann entsprechend gesteuert werden. Dies betrifft z.B. eine Verriegelung der Tankentleerung und ein Signal bei einer herausstehender Trittstufe.

Eine Spiegelverstellung, eine Spiegelheizung und eine diesbezügliche Steuerung können integriert werden. Die Verstellung des Spiegels kann über eine eingefräste Mulde im Bedienelement funktionieren. Je nachdem an welcher Stelle die Mulde berührt wird, können dann der Stellmotor für die Vertikale, der Stellmotor für die Horizontale oder beide Stellmotoren gleichzeitig angesteuert werden.

Die Funktionen des Lastmoduls können programmierbar sein und können so leicht softwaremäßig angepasst werden. Auch die Icons für die verschiedenen Funktionen können sehr leicht und ohne Werkzeugänderung angepasst werden. Das Design des Bedienelements kann leicht angepasst werden, insbesondere ohne Werkzeugänderung. Dabei kann die Elektronik auf der Rückseite des Bedienelements unverändert bleiben, sofern die Schalterpositionen gleich bleiben.

Die Kommunikation zwischen Bedienteil und Leistungseinheit erfolgt besonders bevorzugt über eine Schnittstelle, so dass keine diskrete Verkabelung notwendig ist. Dies bedeutet, dass weniger Verkabelung im Fahrzeug nötig ist. Die Steuerung kann per App bzw. die SCU erfolgen. Insbesondere kann das vorgeschlagene System hierfür eine Schnittstelle zur Steuerung über SCU bzw. App besitzen.

Die Bedieneinheit verfügt vorzugsweise über einen Näherungssensor. Bei Annäherung können die Icons heller erleuchtet werden. Wird die Funktion betätigt erfolgt vorzugsweise ein optisches Feedback durch helles Aufleuchten sowie ein taktiles Feedback per Vibration.

Ferner ist eine zentrale Absicherung aller Funktionen möglich. Das System erkennt vorzugsweise automatisch, wenn noch keine Abfahrtbereitschaft hergestellt wurde. Dies bedeutet, dass beispielsweise eine Trittstufe nicht eingefahren ist oder Schubladen nicht verriegelt sind, aber der Motor gestartet wird. Dann gibt das System dem Nutzer sowohl ein optisches (Funktionen blinken) als auch ein akustisches Feedback (Summer).

Weitere mögliche Funktionen und Vorteile sind: Über die Schnittstelle ist eine Fehlerdiagnose möglich. Eine übergeordnete Bedienung über APP oder SCU ist möglich. Ein zentraler Einbauort kann für eine bessere Reparatur, Wartung und Montage realisiert werden. Ein geringer Platzbedarf, ein geringer Verkabelungsaufwand und ein geringeres Gewicht können realisiert werden. Verschiedenste Funktionen können in ein System integriert werden. Die Funktionen sind über Software einfach anpassbar. Ein neues, modernes und vor allem anpassbares Design kann insbesondere für weitere Baureihen realisiert werden. Eine zentrale Rückmeldung, wenn eine Abfahrbereitschaft noch nicht hergestellt wurde, ist möglich. Dies kann beispielsweise eine Erfassung, dass beim Start eine Trittstufe draußen ist, eine Möbelverriegelung nicht erfolgt ist oder eine Tankentleerung läuft, betreffen, so dass dann eine optische Rückmeldung an der Bedieneinheit und/oder eine akustische Rückmeldung möglich sind.

Ferner können auch andere Funktionen gesteuert werden. Eine Bedienung kann auch über mehrere Bedienteile, beispielsweise vorne über die Bedieneinheit und zusätzlich über ein Tablet oder die SCU, erfolgen.

Es erfolgt vorzugsweise eine optische und haptische Rückmeldung bei Bedienung. Es erfolgt somit eine Zusammenfassung von relevanten Funktionen, insbesondere auch von Chassisfunktionalitäten, in einer Bedieneinheit an einem optimal zugänglichen Platz. Dies ist vor allem bei vollintegrierten Fahrzeugen vorteilhaft, da die Bedieneinheit bei der Konstruktion des Fahrzeugs dann frei positioniert werden kann.

Vorteilhaft ist es, dass die Touchscreenfläche eine Glasfläche ist. Hierdurch ist eine hohe Belastbarkeit bei einer hygienischen und ansprechenden Ausgestaltung möglich.

Vorteilhaft ist es, dass die Bedieneinheit an einem Armaturenbrett und/oder in einer Armlehne im Fahrerhausbereich anstelle einer Fensterheberbedienung angeordnet ist. Hierdurch ist eine intuitive Bedienung möglich.

Vorteilhaft ist es, dass die Funktionen eine Spiegelheizung und/oder eine Spiegelverstellung und/oder eine Scheibenheizung und/oder die Betätigung eines Rollos und/oder die Betätigung einer Sonnenblende und/oder eine Abwasserentleerung und/oder das Öffnen und Schließen eines Fäkalientanks und/oder zumindest eine Beleuchtung des Fahrerhauses und/oder das Durchschalten zumindest einer vorzugsweise am Heck angeordneten Kamera, insbesondere bei einer Tankentleerung, und/oder eine Schubladenverriegelung und/oder das Ein- und Ausfahren zumindest einer Trittstufe umfassen. Somit können wesentliche Funktionen direkt über die Bedieneinheit gesteuert werden.

Vorteilhaft ist es, dass die Touchscreenfläche eine Mulde aufweist und dass an der Muldenfläche der Mulde eine lokal variierende Funktionsauswahl realisiert ist. Dies ermöglicht eine komfortable Verstellung, da dann die Mulde erfühlt und gleichzeitig der Blick in den betreffenden Spiegel gehen kann.

Vorteilhaft ist es, dass durch die lokal variierende Funktionsauswahl in Abhängigkeit von dem Ort einer lokalen Berührung der Muldenfläche der Mulde durch eine Bedienperson eine variable Ansteuerung von Stellmotoren zumindest eines Spiegels ermöglicht ist. Insbesondere können dadurch Verstellungen in allen erforderlichen Richtungen in komfortabler Weise ermöglicht werden, ohne dass ein Umschalten zwischen den Motoren erforderlich ist.

Vorteilhaft ist es, dass die Mulde durch Fräsen ausgestaltet ist. Hierdurch kann die Muldenfläche insbesondere konkav ausgeführt werden.

Vorteilhaft ist es, dass ein Näherungssensor vorgesehen ist und dass die Symbole der Touchscreenfläche heller und/oder hell erleuchtet werden, wenn mittels des Näherungssensors eine Annäherung eines Körperteils, insbesondere einer Hand, einer Bedienperson erfasst wird. Hierdurch wird insbesondere bei einer Nachtfahrt eine komfortable Bedienung ermöglicht.

Vorteilhaft ist es, dass bei einer Betätigung einer Funktion eine optische Rückmeldung, insbesondere ein helles oder helleres Aufleuchten, und/oder eine taktile Rückmeldung, insbesondere durch Vibration, erfolgt. Hierdurch wird eine intuitiv erfassbare Rückmeldung über die wirksame Anwahl ermöglicht.

Vorteilhaft ist es, dass zumindest eine Funktion, insbesondere eine zusätzliche Funktion, von einer Leistungseinheit gesteuert wird, wobei die zumindest eine von der Leistungseinheit gesteuerte Funktion insbesondere zumindest eine Spiegelheizung und/oder zumindest eine Positionsleuchte und/oder ein Tagfahrlicht und/oder eine Sitzheizung und/oder eine Fahrertür und/oder zumindest eine AUX-Anschlussstelle und/oder ein Hubbett und/oder zumindest einen "D+"-Ausgang, der insbesondere für ein Verriegelung einer Tankentleerung und/oder für ein Signal bei herausstehender Trittstufe dient, betrifft. Hierdurch kann eine noch höhere Integration ermöglicht werden.

Vorteilhaft ist es, dass die Leistungseinheit und die Bedieneinheit über eine Schnittstelle, die insbesondere keine diskrete Verkabelung erfordert, miteinander verbunden sind. Somit kann gegebenenfalls auf eine zusätzliche Verkabelung verzichtet werden.

Vorteilhaft ist es, dass das Lastmodul erfasst, wenn bei nicht bestehender Abfahrbereitschaft, insbesondere bei zumindest einer nicht eingefahrenen Trittstufe und/oder zumindest einer nicht verriegelten Schublade, ein Benutzer das Wohnmobil für eine Fahrt startet, insbesondere einen Motor des Wohnmobils startet, und dass die Bedieneinheit den Benutzer eine optische Warnung, insbesondere durch Blinken der Symbole, und/oder einer akustische Warnung, insbesondere durch Summen, gibt, wenn der Benutzer bei nicht bestehender Abfahrbereitschaft das Wohnmobil für die Fahrt startet. Hierdurch kann ein Funktionsumfang weiter erhöht werden. Somit kann eine weitere Erhöhung der Integration von Funktionen in das Lastmodul erzielt werden.

Weitere Vorteile und Einzelheiten der Erfindung werden anhand des in den schematischen Figuren dargestellten Ausführungsbeispiels näher erläutert. Hierbei zeigen:
- Fig. 1: eine Bedieneinheit für ein Lastmodul eines Wohnmobils entsprechend einem Ausführungsbeispiel in einer schematischen Darstellung;
- Fig. 2: eine Bedieneinheit für ein Lastmodul eines Wohnmobils des Ausführungsbeispiels in einer abgewandelten Ausgestaltung in einer schematischen Darstellung;
- Fig. 3: ein Wohnmobil entsprechend dem Ausführungsbeispiels, wobei auszugsweise ein Innenraum eines Fahrerhausbereiches dargestellt ist;
- Fig. 4: das in Fig. 2 dargestellte Bedienteil in einem Zustand, in dem das Wohnmobil geparkt ist;
- Fig. 5: eine Tabelle zur Erläuterung der Funktionsweise des Lastmoduls entsprechend dem Ausführungsbeispiel, wobei Zustände in Bezug auf verschiedene Funktionsbeschreibungen angegeben sind;
- Fig. 6: das Lastmodul mit dem in Fig. 1 dargestellten Bedienteil und einer Leistungseinheit in einer schematischen Darstellung;
- Fig. 7 bis: 9 Tabellen mit Steckerbelegungen für das in Fig. 6 dargestellte Lastmodul zur Erläuterung einer möglichen Ausgestaltung der Erfindung und
- Fig. 10: eine Tabelle mit Sicherungsbelegungen für das in Fig. 6 dargestellte Lastmodul zur Erläuterung einer möglichen Ausgestaltung der Erfindung.

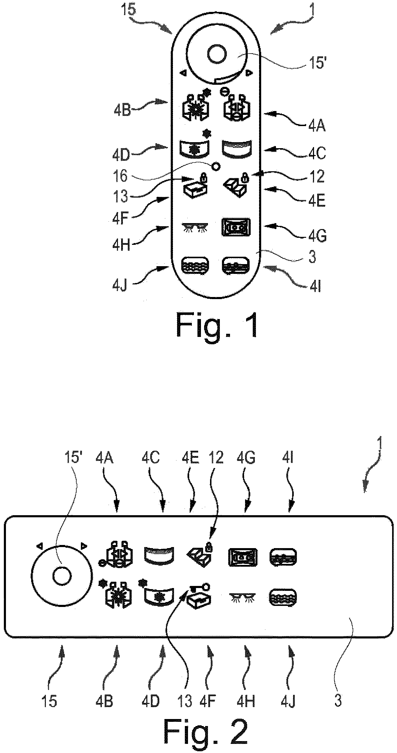

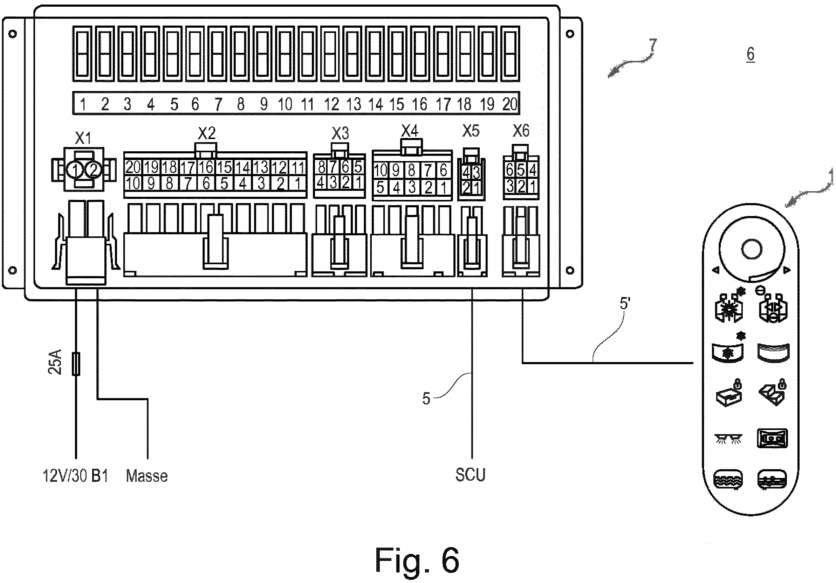

Fig. 1 zeigt eine Bedieneinheit 1 eines Wohnmobils 2 entsprechend einem Ausführungsbeispiel in einer schematischen Darstellung. Die Bedieneinheit 1 dient für Funktionen eines Wohnmobils 2. Die Bedieneinheit 1 weist eine Touchscreenfläche 3 auf, auf der entsprechend den Funktionen Symbolen 4A bis 4J vorgesehen sind, so dass über die Symbole 4A bis 4J die Funktionen bedient werden können. Die Bedieneinheit 1 kann über ein Bussystem 5, insbesondere über SCU 5, angesteuert werden, wie es in Fig. 6 veranschaulicht ist. Die Bedieneinheit 1 ist in diesem Ausführungsbeispiel Bestandteil eines Lastmoduls 6 (Fig. 6). Die Bedieneinheit 1 kann dann mittels einer Leistungseinheit 7 (Fig. 6) des Lastmoduls 6 über das Bussystem 5 angesteuert werden. Ferner kann die Bedieneinheit 1 auch über ein Bussystem 5', insbesondere SCU 5', mit der Leistungseinheit 7 verbunden sein.

Die Funktionen 4A bis 4J, die durch entsprechende Symbole 4A bis 4J auf der Touchscreenfläche 3 dargestellt sind, umfassen in diesem Ausführungsbeispiel eine Spiegelverstellung 4A, eine Spiegelheizung 4B, die Betätigung einer Sonnenblende 4C beziehungsweise eines Rollos 4C, eine Scheibenheizung 4D, das Ein- und Ausfahren 4E zumindest einer Trittstufe, eine Schubladenverriegelung 4F, das Durchschalten 4G einer am Heck angeordneten Kamera, eine Beleuchtung 4H des Fahrerhauses, das Öffnen und Schließen eines Fäkalientanks 4I und eine Abwasserentleerung 4J. Die Spiegelverstellung 4A kann hier ein Anklappen der Seitenspiegel an die Seitenwände des Wohnmobils 1 betreffen.

Die Positionsbelegung der einzelnen Funktionen 4A bis 4J auf der Touchscreenfläche 3 kann frei programmiert werden. Die Touchscreenfläche 3 ist vorzugsweise eine Glasfläche 3. Hierbei können die Symbole 4A bis 4J durch eine Bildschirmfunktion auf der Touchscreenfläche 3 angezeigt werden oder auf die Touchscreenfläche 3 aufgedruckt sein. Somit kann je nach Fahrzeug, insbesondere Baureihe, eine angepasste Ausstattung realisiert werden.

Fig. 2 zeigt eine Bedieneinheit 1 für ein Lastmodul 6 eines Wohnmobils 2 in einer abgewandelten Ausgestaltung.

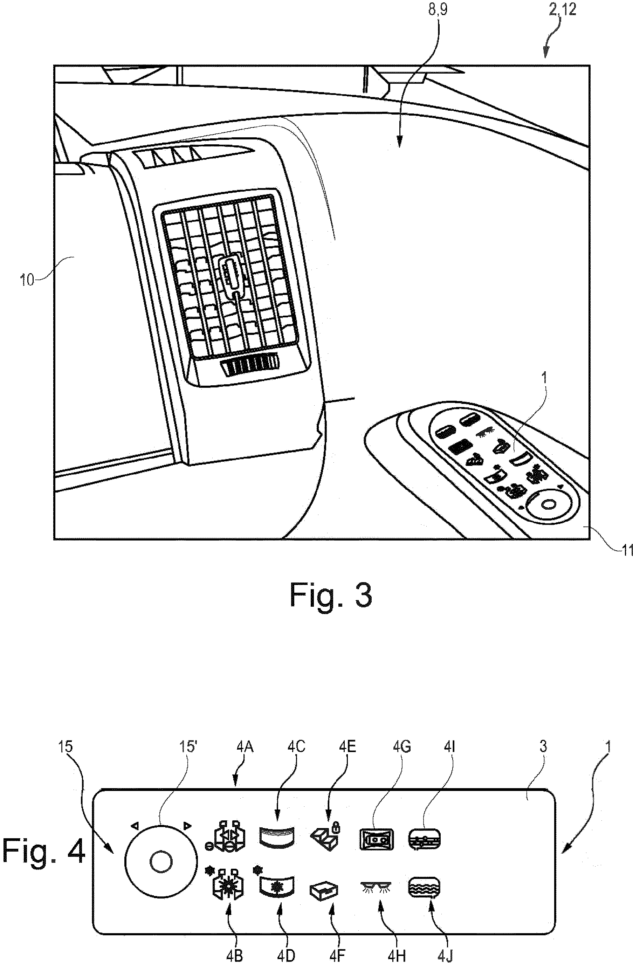

Fig. 3 zeigt ein Wohnmobil 2 entsprechend dem Ausführungsbeispiels, wobei auszugsweise ein Innenraum 8 eines Fahrerhausbereiches 9 dargestellt ist. Hierbei sind ein Armaturenbrett 10 und exemplarisch eine Armlehne 11 dargestellt. Speziell die in Fig. 1 dargestellte Bedieneinheit 1 kann in einer Armlehne 11 im Fahrerhausbereich 12 anstelle einer Fensterheberbedienung angeordnet sein. Speziell die in Fig. 2 dargestellte Bedieneinheit 1 kann an dem Armaturenbrett 10 angeordnet sein.

Fig. 4 zeigt das in Fig. 2 dargestellte Bedienteil 1 in einem Zustand, in dem das Wohnmobil 2 geparkt ist. Hierbei ist veranschaulicht, dass einzelne Bestandteile der Symbole nicht dargestellt sein können. Beispielsweise sind in Fig. 1 und 2 Schlösser/Schlüssel 12, 13 dargestellt, die in Fig. 4 nicht angezeigt werden. Während der Fahrt beziehungsweise vor Fahrtantritt können die Schlösser/Schlüssel 12, 13 signalisieren, dass die Trittstufe eingezogen und die Schubladen gesperrt sind.

Die Touchscreenfläche 3 weist eine Mulde 15 auf. An der Muldenfläche 15' der Mulde 15 ist eine lokal variierende Funktionsauswahl realisiert. Hierbei kann durch den Ort einer lokalen Berührung der Muldenfläche 15' eine lokal variierende Funktionsauswahl getroffen werden. In Abhängigkeit davon, wo eine Bedienperson die Muldenfläche 15' berührt, erfolgt dann durch eine variable Ansteuerung von Stellmotoren eine Einstellung eines Spiegels. Dies betrifft die Einstellung an den Fahrer, damit dieser nach hinten sehen kann. Die Mulde 15 kann durch Fräsen in der Glasfläche 3 ausgestaltet werden.

Außerdem ist ein Näherungssensor 16 (Fig. 1) vorgesehen. Dieser erfasst die Annäherung eines Körperteils, insbesondere einer Hand, einer Bedienperson. Die Symbole 4A bis 4J der Touchscreenfläche 3 leuchten dann heller auf, so dass die Symbole 4A bis 4J besser zu erkennen sind. Wen eine der Funktion 4A bis 4J betätigt wird, dann erfolgt eine optische Rückmeldung durch helles beziehungsweise helleres Aufleuchten des jeweiligen Symbols 4A bis 4J und/oder eine taktile Rückmeldung, wobei die Touchscreenfläche 3 insbesondere vibrieren kann.

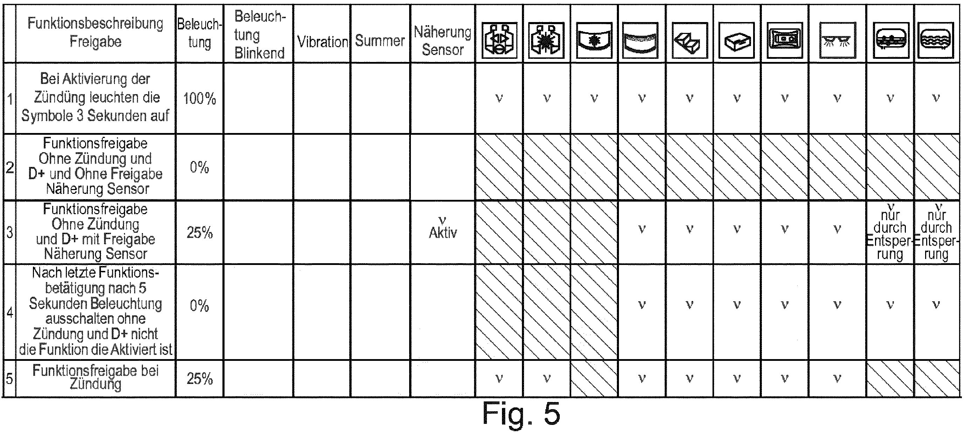

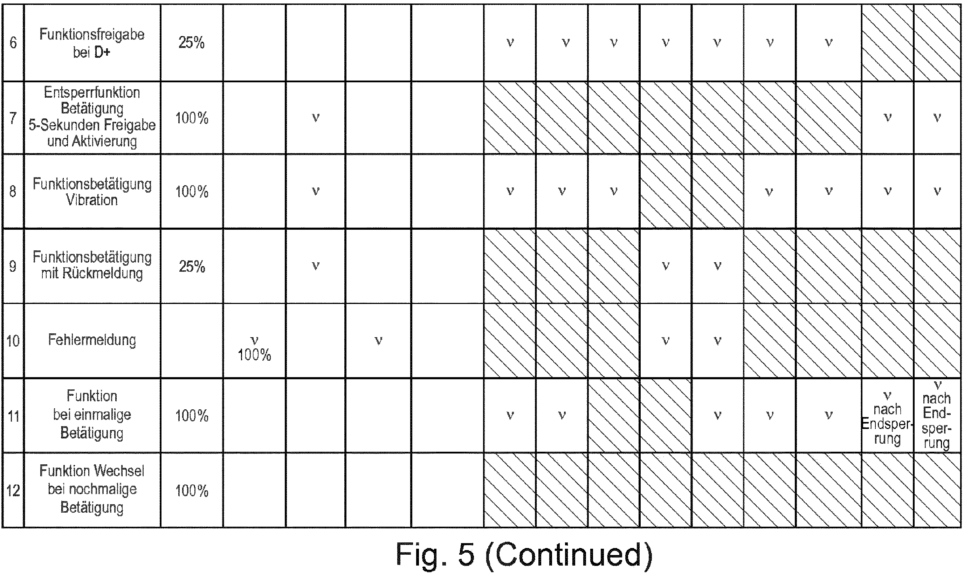

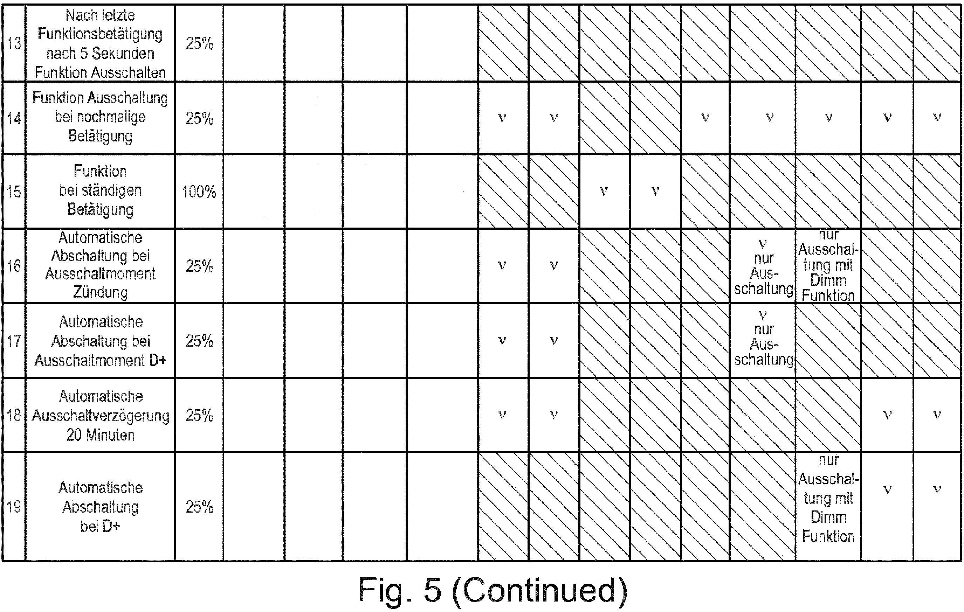

Fig. 5 zeigt eine Tabelle zur Erläuterung der Funktionsweise des Lastmoduls 6 entsprechend dem Ausführungsbeispiel, wobei Zustände in Bezug auf verschiedene Funktionsbeschreibungen angegeben sind.

Fig. 6 zeigt das Lastmodul 6 mit dem in Fig. 1 dargestellten Bedienteil 1 und einer Leistungseinheit 7 in einer schematischen Darstellung. Die Leistungseinheit 7 und die Bedieneinheit 1 sind über eine Schnittstelle 5', die keine diskrete Verkabelung erfordert, miteinander verbunden. Das Bussystem 5' kann insbesondere durch das bereits vorgesehene Bussystem 5, insbesondere SCU, realisiert werden.

Funktionen können von der Leistungseinheit 7 gesteuert werden. Dies betrifft insbesondere die Spiegelheizung 4B, Positionsleuchten, ein Tagfahrlicht, eine Sitzheizung, eine Fahrertür, zumindest eine AUX-Anschlussstelle, ein Hubbett und zumindest einen "D+"-Ausgang, der insbesondere für ein Verriegelung einer Tankentleerung und/oder für ein Signal bei herausstehender Trittstufe dient.

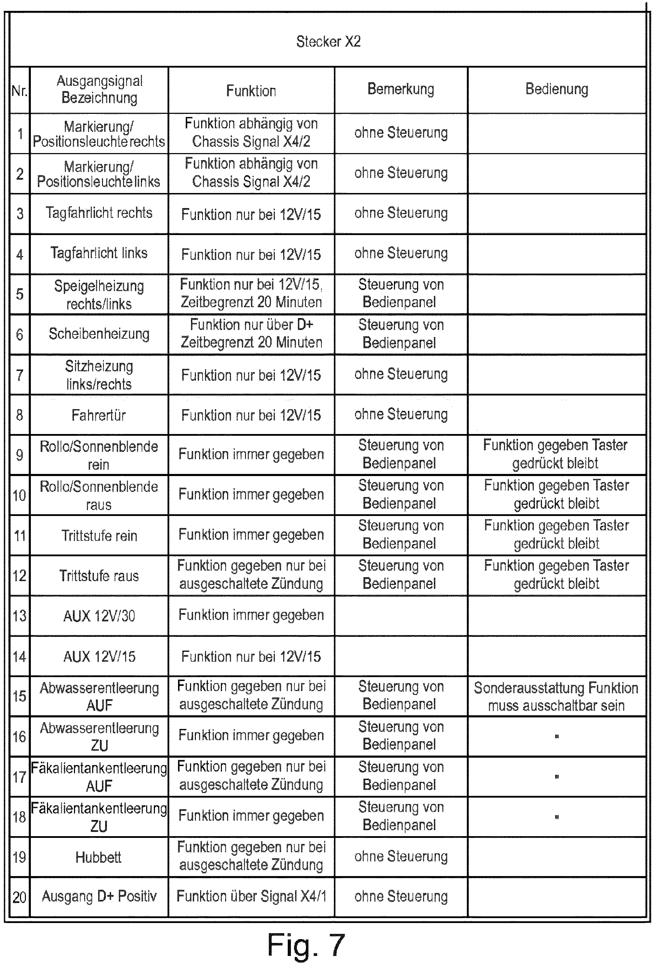

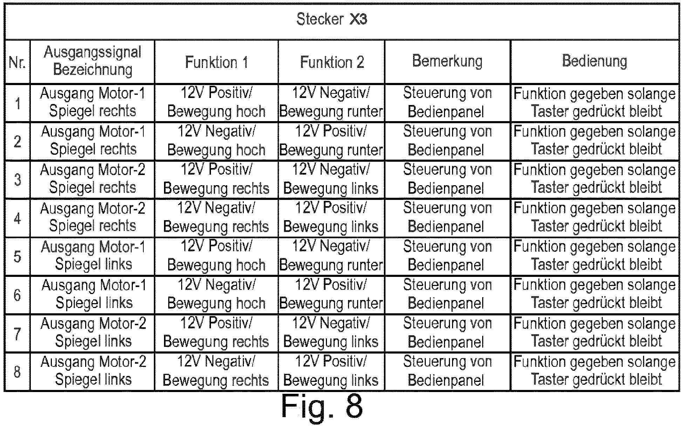

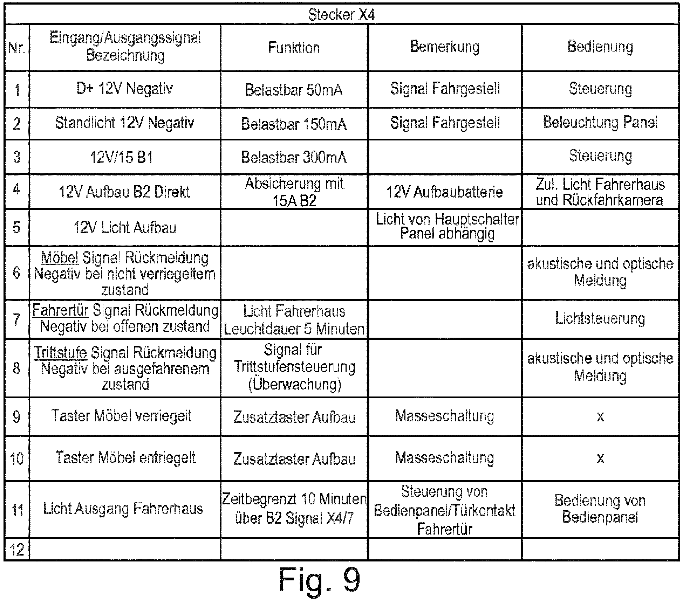

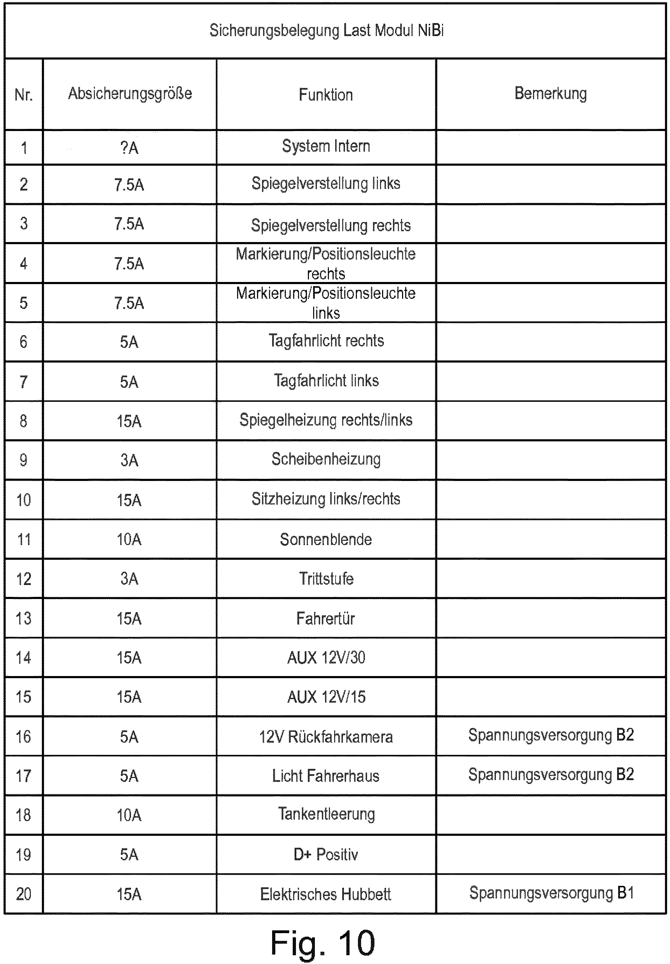

Fig. 7 bis 9 zeigen Tabellen mit Steckerbelegungen für das in Fig. 6 dargestellte Lastmodul 6 zur Erläuterung einer möglichen Ausgestaltung der Erfindung. Fig. 10 zeigt eine Tabelle mit Sicherungsbelegungen für das in Fig. 6 dargestellte Lastmodul 6 zur Erläuterung einer möglichen Ausgestaltung der Erfindung.

Das Lastmodul 6 kann bei nicht bestehender Abfahrbereitschaft, insbesondere bei nicht eingefahrener Trittstufe oder nicht verriegelter Schublade, einen Benutzer warnen, wenn dieser das Wohnmobil 1 für eine Fahrt startet, insbesondere also einen Motor des Wohnmobils 1 startet. Diese Warnung kann über die Bedieneinheit 1 erfolgen. Hierbei kann die Bedieneinheit 1 den Benutzer optisch warnen, insbesondere durch Blinken der Symbole 4A bis 4J. Auch eine eine akustische Warnung, insbesondere durch Summen, ist möglich.

Die Erfindung ist nicht auf die beschriebenen Ausführungsbeispiele beschränkt.

## Patentansprüche

1. Bedieneinheit (1) für Funktionen eines Wohnmobils (2) mit einer Touchscreenfläche (3) mit Symbolen (4A - 4J) für die zu bedienenden Funktionen, wobei die Bedieneinheit (1) über ein Bussystem (5), insbesondere SCU (5), angesteuert wird,
**dadurch gekennzeichnet,**
**dass** die Positionsbelegung der einzelnen Funktionen (4A - 4J) auf der Touchscreenfläche (3) frei programmiert werden kann und die Symbole (4A - 4J) durch eine Bildschirmfunktion angezeigt werden und/oder aufgedruckt sind.

2. Bedieneinheit nach Anspruch 1,
**dadurch gekennzeichnet,**
**dass** die Touchscreenfläche (3) eine Glasfläche (3) ist.

3. Bedieneinheit nach Anspruch 1 oder 2,
**dadurch gekennzeichnet,**
**dass** die Bedieneinheit (1) an einem Armaturenbrett (10) und/oder in einer Armlehne (11) im Fahrerhausbereich (12) anstelle einer Fensterheberbedienung angeordnet ist.

4. Bedieneinheit nach einem der Ansprüche 1 bis 3,
**dadurch gekennzeichnet,**
**dass** die Funktionen (4A - 4J) eine Spiegelheizung (4B) und/oder eine Spiegelverstellung (4A) und/oder eine Scheibenheizung (4D) und/oder die Betätigung eines Rollos (4C) und/oder die Betätigung einer Sonnenblende (4C) und/oder eine Abwasserentleerung (4J) und/oder das Öffnen und Schließen eines Fäkalientanks (4I) und/oder zumindest eine Beleuchtung (4H) des Fahrerhauses und/oder das Durchschalten (4G) zumindest einer vorzugsweise zumindest am Heck angeordneten Kamera, insbesondere bei einer Tankentleerung, und/oder eine Schubladenverriegelung (4F) und/oder das Ein- und Ausfahren (4E) zumindest einer Trittstufe umfassen.

5. Bedieneinheit nach einem der Ansprüche 1 bis 4,
**dadurch gekennzeichnet,**
**dass** die Touchscreenfläche (3) eine Mulde (15) aufweist und dass an der Muldenfläche (15') der Mulde (15) eine lokal variierende Funktionsauswahl realisiert ist.

6. Bedieneinheit nach Anspruch 5,
**dadurch gekennzeichnet,**
**dass** durch die lokal variierende Funktionsauswahl in Abhängigkeit von dem Ort einer lokalen Berührung der Muldenfläche (15') der Mulde (15) durch eine Bedienperson eine variable Ansteuerung von Stellmotoren zumindest eines Spiegels ermöglicht ist.

7. Bedieneinheit nach Anspruch 5 oder 6,
**dadurch gekennzeichnet,**
**dass** die Mulde (15) durch Fräsen ausgestaltet ist.

8. Bedieneinheit nach einem der Ansprüche 1 bis 7,
**dadurch gekennzeichnet,**
**dass** ein Näherungssensor (16) vorgesehen ist und dass die Symbole (4A - 4J) der Touchscreenfläche (3) heller und/oder hell erleuchtet werden, wenn mittels des Näherungssensors (16) eine Annäherung eines Körperteils, insbesondere einer Hand, einer Bedienperson erfasst wird.

9. Bedieneinheit nach einem der Ansprüche 1 bis 8,
**dadurch gekennzeichnet,**
**dass** bei einer Betätigung einer Funktion (4A - 4J) eine optische Rückmeldung, insbesondere ein helles oder helleres Aufleuchten, und/oder eine taktile Rückmeldung, insbesondere durch Vibration, erfolgt.

10. Lastmodul (6) für ein Wohnmobil (2) mit zumindest einer Bedieneinheit (1), die nach einem der Ansprüche 1 bis 9 ausgebildet ist.

11. Lastmodul nach Anspruch 10,
**dadurch gekennzeichnet,**
**dass** zumindest eine Funktion, insbesondere eine zusätzliche Funktion, von einer Leistungseinheit (7) gesteuert wird, wobei die zumindest eine von der Leistungseinheit (7) gesteuerte Funktion insbesondere zumindest eine Spiegelheizung (4B) und/oder zumindest eine Positionsleuchte und/oder ein Tagfahrlicht und/oder eine Sitzheizung und/oder eine Fahrertür und/oder zumindest eine AUX-Anschlussstelle und/oder ein Hubbett und/oder zumindest einen "D+"-Ausgang, der insbesondere für ein Verriegelung einer Tankentleerung und/oder für ein Signal bei herausstehender Trittstufe dient, betrifft.

12. Lastmodul nach Anspruch 11,
**dadurch gekennzeichnet,**
**dass** die Leistungseinheit (7) und die Bedieneinheit (1) über eine Schnittstelle (5'), die insbesondere keine diskrete Verkabelung erfordert, insbesondere über ein Bussystem (5'), miteinander verbunden sind.

13. Wohnmobil (2) mit einem Lastmodul (6), das nach einem der Ansprüche 11 bis 12 ausgebildet ist,

14. Wohnmobil nach Anspruch 13,
**dadurch gekennzeichnet,**
**dass** das Lastmodul (6) erfasst, wenn bei nicht bestehender Abfahrbereitschaft, insbesondere bei zumindest einer nicht eingefahrenen Trittstufe und/oder zumindest einer nicht verriegelten Schublade, ein Benutzer das Wohnmobil für eine Fahrt startet, insbesondere einen Motor des Wohnmobils startet, und dass die Bedieneinheit (1) den Benutzer eine optische Warnung, insbesondere durch Blinken der Symbole (4A - 4J), und/oder eine akustische Warnung, insbesondere durch Summen, ausgibt, wenn der Benutzer bei nicht bestehender Abfahrbereitschaft das Wohnmobil für die Fahrt startet.
